# EUROPÄISCHE PATENTSCHRIFT

(11) **EP 2 318 733 B1**
(45) Veröffentlichungstag und Bekanntmachung des Hinweises auf die Patenterteilung: **08.02.2012**
(21) Anmeldenummer: 09775916.1
(22) Anmeldetag: 29.06.2009
(51) Int. Cl.: F16H 29/04, F16H 57/00

(54) **KURBEL-CVT-GETRIEBE**
CRANK-CVT TRANSMISSION
TRANSMISSION VILEBREQUIN CVT

(30) Priorität: 21.07.2008 DE 102008034192; 25.09.2008 DE 102008048853
(43) Veröffentlichungstag der Anmeldung: 11.05.2011
(73) Patentinhaber: Schaeffler Technologies GmbH & Co. KG, 91074 Herzogenaurach (DE)
(72) Erfinder: MAN, Laszlo, 77833 Ottersweier-Unzhurst (DE); FRIEDMANN, Oswald, 77839 Lichtenau (DE); BECHT, Marco, 77815 Bühl (DE); GREB, Peter, 77815 Bühl (DE); SCHUMANN, Lars, 77815 Bühl (DE); BURKHART, Dirk, 76889 Klingenmünster (DE); DREHER, Alexander, 76547 Sinzheim (DE)
(86) Internationale Anmeldenummer: PCT/DE2009/000897
(87) Internationale Veröffentlichungsnummer: WO 2010/009693

(56) Entgegenhaltungen:
- DE-A1- 10 243 533
- DE-A1- 19 520 508
- GB-A- 2 325 282

## Beschreibung

Die Erfindung bezieht sich auf ein Kurbel-CVT-Getriebe und insbesondere die Abtriebsanordnung auf der Abtriebsseite des Kurbel-CVT-Getriebes.

Ein Kurbel-CVT-Getriebe ist beispielsweise aus der DE 102 43 533 A1 bekannt. Bei diesem Getriebe ist auf einer von einem Motor antreibbaren Eingangswelle, die im Bezug auf das Getriebe eine antreibende Welle bildet, eine verstellbare Exzenter-Antriebsanordnung mit Exzenterbauteilen vorgesehen, die über pleuelähnliche Verbindungselemente mit einer getriebenen Welle verbunden ist, welche im Bezug auf das Getriebe eine Ausgangswelle bildet. Die getriebene Welle wird durch die Übertragung des Hubs der Verbindungselemente mittels Freilaufeinrichtungen auf die Welle angetrieben, die zwischen den Verbindungselementen und dieser Welle vorgesehen sind.

Bei der Anordnung gemäß der DE 102 43 533 A1 ist ferner eine elektrische Maschine vorgesehen, die über Kupplungsmittel wahlweise nur mit der Antriebsseite des Getriebes oder nur mit dem Motor oder aber gleichzeitig mit der Abtriebsseite und dem Motor antriebsmäßig verbindbar ist. Die Abtriebsseite des Getriebes wird durch eine getriebene Welle und der Motor durch eine Brennkraftmaschine gebildet. Zur Verstellung der Exzentrizität und damit des Hubs der Verbindungselemente weist die antreibende Welle eine sich in Richtung der Wellenachse erstreckende Ausnehmung auf, welche eine Verstellwelle aufnimmt. Die Verstellwelle ist in der Ausnehmung verdrehbar gelagert. Die Verstellwelle besitzt eine Außenverzahnung, deren Zähne mit den Zähnen der Innenverzahnung der Exzenterbauteile in Eingriff stehen. Die Verstellwelle ist über die den Kopfkreis der Außenverzahnung bildenden Abschnitte dieser Außenverzahnung in der Ausnehmung der antreibenden Welle zentriert bzw. gelagert. Durch Verdrehung der Verstellwelle gegenüber der antreibenden Welle werden über die ineinandergreifenden Verzahnungen die Exzenterbauteile der Exzentereinheit um den entsprechenden Führungsbereich verdreht bzw. verschwenkt. Durch diese Verdrehung der Verstellwelle wandert die Mittellinie der Exzenterbauteile entlang eines Kreises, der seinen Mittelpunkt als Mittelpunkt der Führungsbereiche hat, so dass dadurch eine Verringerung bzw. Vergrößerung des Abstands der Mittellinie der Exzenterbauteile zur Rotationsachse der antreibenden Welle erfolgt. Dies bedeutet, dass die Exzentrizität der Exzenterbauteile gegenüber der Rotationsachse der antreibenden Welle verringert oder vergrößert wird und somit auch der auf die Verbindungselemente bzw. Pleuelstangen übertragbare Hub.

Bei den bekannten Kurbel-CVT-Getrieben sind auf der Abtriebsseite die pleuelähnlichen Verbindungselemente an augenartigen Ausbuchtungen bzw. einem Anlenkbereich angelenkt, der an einem Außenring der Freilaufeinrichtung, die an ihrem Innenring mit der Abtriebswelle verbunden ist, vorgesehen ist. An diesem Anlenkbereich ist ein Ende eines Verbindungselements jeweils um eine zugeordnete Achse verschwenkbar bzw. verdrehbar gelagert. Dazu ist zwischen dem pleuelartigen Verbindungselement und dem Außenring des Freilaufs, an dem der Anlenkbereich vorgesehen ist, ein Lager vorgesehen.

Bei bekannten Kurbel-CVT-Getrieben sind die antreibende Welle und die Abtriebswelle zueinander parallel. Entlang ihrer Axialrichtungen sind mehrere Sätze aus Exzentereinheiten bzw. Freilaufeinrichtungen vorgesehen, die jeweils mit zugeordneten pleuelartigen Verbindungselementen verbunden sind, so dass mittels jeden Satzes das Drehmoment von der antreibenden Welle auf die Abtriebswelle innerhalb eines bestimmten Drehwinkelbereichs der Wellen übertragen wird.

Die bekannten Kurbel-CVT-Getriebe können ein klingendes charakteristisches Geräuschverursachen welches als "Kollern" bezeichnet wird. Verschiedene Untersuchungen haben gezeigt, dass es sich hierbei um eine Lautstärkemodulation handelt, die in Zusammenhang mit Schwingungen erster Ordnung aus der Antriebsdrehzahl stehen. Die Ursache dafür ist in der Kinematik des Kurbel-CVT-Getriebes begründet, welche durch sich wiederholende periodisch ablaufende Vorgänge (Bewegungen, Geschwindigkeiten, Beschleunigungen, Kräfte und Momente) gekennzeichnet ist. Alle diese Vorgänge haben ein mit dem Kurbelmechanismus zusammenhängendes typisches, sich periodisch wiederholendes Muster.

Davon ausgehend ist es Aufgabe der Erfindung, ein Kurbel-CVT-Getriebe mit einer Abtriebsanordnung vorzusehen, bei dem die Kollergeräusche vermindert sind.

Diese Aufgabe wird mit einer Abtriebsanordnung für ein Kurbel-CVT-Getriebe mit den Merkmalen des Anspruchs 1 gelöst. Bevorzugte Ausführungsformen sind in den abhängigen Ansprüchen angegeben.

Der Erfindung liegt der Gedanke zugrunde, in die periodischen Vorgänge bewusst eine Änderung bzw. Störung der periodischen Abläufe einzubringen, so dass das typische periodische Muster im Kurbel-CVT-Getriebe unterbrochen bzw. gestört wird und zumindest teilweise ein nicht periodischer Ablauf entsteht. Dazu wird ein zusätzliches Mittel im Kurbel-CVT-Getriebe, vorzugsweise der Abtriebsanordnung vorgesehen, das angepasst ist, eine Unterbrechung des periodischen Ablaufs bzw. Änderung des periodischen Ablaufs vorzusehen, wobei dieses Mittel eine geometrische Unregelmäßigkeit in der Getriebekinematik im Bereich der Abtriebswelle, in Form einer Exzentrizität zweier Bauteile der Abtriebsanordnung ist.

Es hat sich gezeigt, dass das durch die Erfindung erzeugte unregelmäßige Geräuschmuster ein wesentlich verbessertes Geräuschempfinden zur Folge hat. Der Gesamtlautstärkepegel wird zwar insgesamt nicht oder kaum reduziert, aber das typische "Kollern" bezüglich der ersten Ordnung der Antriebsdrehzahl ist nicht mehr zu erkennen. Es werden also die für das menschliche Gehör störend wirkenden periodischen Geräuschanteile aus dem emittierten Spektrum stark vermindert oder sogar entfernt.

Die geometrische Störung kann bevorzugter Weise etwa ein exzentrisch angeordneter Freilauf auf der Abtriebswelle sein. Es können auch mehrere der Freiläufe aus dem Freilaufpaket exzentrisch angeordnet sein, wobei die Exzentrizitäten gleichsinnig oder gegeneinander verdreht vorgesehen sein können. Jedes andere Mittel zum Einbringen einer Exzentrizität kann ebenso verwendet werden.

In einer weiteren bevorzugten Ausführungsform wird die Abtriebswelle selbst exzentrisch gelagert. Die Exzentrizität kann nur eine Endlagerung der Abtriebswelle betreffen oder auch beide Lagerstellen. Die Exzentrizitäten können auch hier gleichsinnig oder gegeneinander verdreht sein. Bei zueinander verdrehten Exzentrizitäten taumelt die Abtriebswelle.

Die Möglichkeiten der exzentrischen Anordnung der Freiläufe auf der Abtriebswelle und der exzentrischen Lagerung der Abtriebswelle an sich können auch kombiniert werden.

Um den gewünschten Effekt der Verminderung des Kollergeräuschs zu erzielen, sind nur sehr geringe Exzentrizitäten erforderlich, die im Bereich von einigen Hundertsteln bis zu einigen zehntel Millimeter liegen. Bevorzugt wird eine Exzentrizität von 0,01 bis 3 mm, weiter vorzugsweise von etwa 0,3 mm.

Nachfolgend wird die Erfindung beispielhaft anhand der beigefügten Figuren beschrieben, in denen:
- Figur 1: schematisch ein erfindungsgemäßes Kurbel-CVT-Getriebe mit einer Exzentrizität des Freilaufpakets zeigt;
- Figur 2: die Anordnung aus Figur 1 in einer zweiten Position zeigt;
- Figur 3: schematisch ein Kurbel-CVT-Getriebe entsprechend dem Stand der Technik zeigt; und
- Figur 4: den Verlauf des Abtriebsmoments eines Kurbel-CVT-Getriebes gemäß dem Stand der Technik (oberer Teil von Figur 4) und eines erfindungsgemäßen Kurbel-CVT-Getriebes (unterer Teil von Figur 4) zeigt.

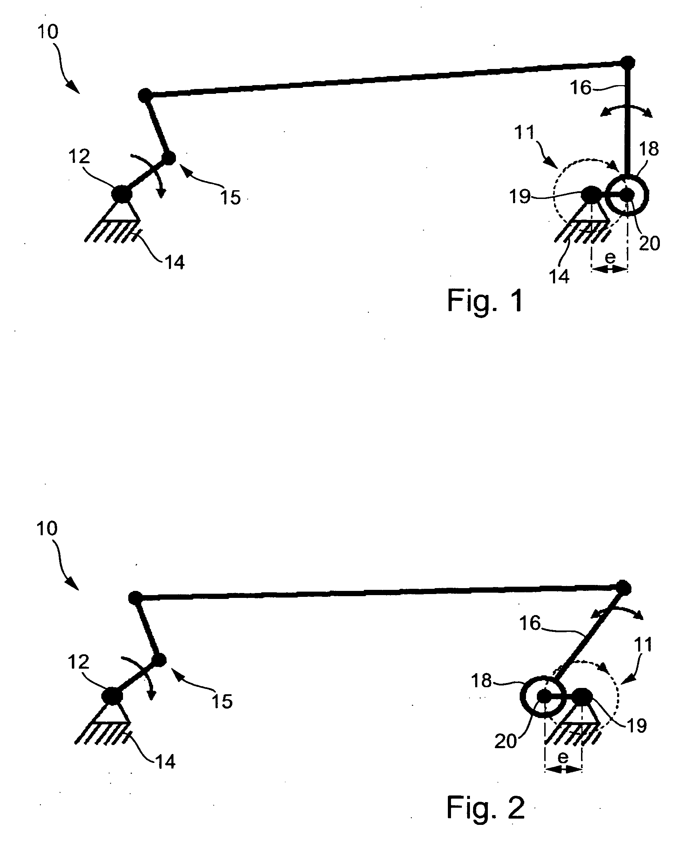

Bei dem in Fig. 1 und 2 schematisch dargestellten erfindungsgemäßen Kurbel-CVT-Getriebe 10 ist eine Antriebswelle 12 drehbar in einem Gehäuse 14 gelagert. An der Antriebswelle, die die Eingangsseite des Kurbel-CVT-Getriebes 10 bildet und mit beispielsweise einem Verbrennungsmotor als Antriebsmotor verbunden ist, ist eine Exzenteranordnung 15 mit mehreren Exzentereinheiten vorgesehen. Bei Drehung der Antriebswelle 12 sorgt die Exzenteranordnung 15 dafür, dass für pleuelartige Verbindungselemente 16, die mit der Exzenteranordnung 15 verbunden sind, eine Hubbewegung entsteht, wobei die Größe des Hubs von der Exzentrizität der Exzentereinheiten der Exzenteranordnung 15 abhängig ist. Die pleuelartigen Verbindungselemente 16, die somit eine Hubbewegung ausführen, übertragen diesen Hub an Freilaufeinheiten 18, die um eine Abtriebswelle 19 vorgesehen sind. Die Abtriebswelle 19 und die Freilaufeinheiten 18 sind Teil einer Abtriebsanordnung 11 des Kurbel-CVT-Getriebes 10.

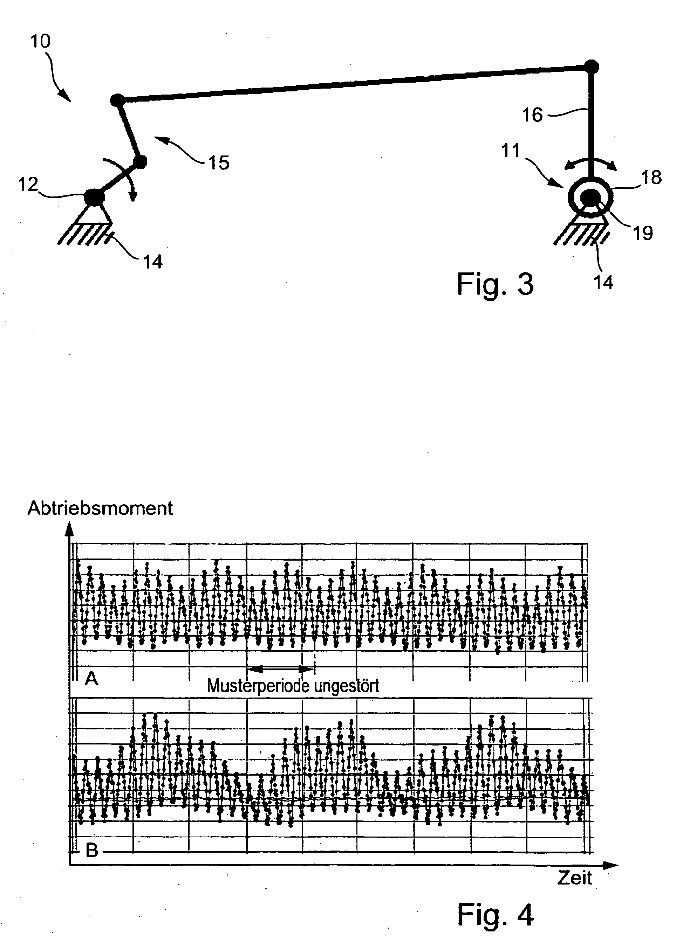

Anders als bei der in Fig. 3 dargestellten herkömmlichen Anordnung des Kurbel-CVT-Getriebes 10, bei dem die Abtriebswelle 19 drehbar unmittelbar im Gehäuse 14 gelagert ist und die Freilaufeinheiten 18 konzentrisch um die Abtriebswelle 19 vorgesehen sind, ist bei der in Fig. 1 und 2 dargestellten erfindungsgemäßen Anordnung die Abtriebswelle 19 ebenfalls drehbar im Gehäuse 14 gelagert, wobei jedoch eine geometrische Störung in die Anordnung dadurch eingebracht ist, dass die Freilaufeinheiten 18 exzentrisch gegenüber der Abtriebswelle 19 sind und eine Exzentrizität e diesbezüglich aufweisen. Es kann eine der Freilaufeinheiten 18 exzentrisch angeordnet sein, oder aber mehrere (einschließlich aller) Freilaufeinheiten 18. Dazu ist jeweils insbesondere ein weiteres Kurbelglied 20 an der Abtriebswelle 19 vorgesehen, das mit der Abtriebswellendrehzahl rotiert und dadurch eine sich ständig ändernde Kinematik erzeugt (siehe Fig. 1, Fig. 2).

Statt der exzentrischen Anordnung der Freilaufeinheit(en) 18 ist auch eine exzentrische Lagerung der Abtriebswelle 19 alternativ oder zusätzlich als Mittel zum Unterbrechen und Beeinflussen des periodischen Ablaufs möglich.

Fig. 4 zeigt die Wirkungen der erfindungsgemäßen Anordnung, wobei in der oberen Hälfte in Fig. 4 das Abtriebsmoment einer herkömmlichen Anordnung entsprechend Fig. 3 gezeigt ist, wobei das periodische Muster deutlich erkennbar ist, während in der unteren Hälfte in Fig. 4 das Abtriebsmoment mit der Anordnung gemäß Fig. 1 und 2 gezeigt ist, woraus deutlich erkennbar ist, dass keine Periodizität vorhanden ist. Dies führt dazu, dass das als störend empfundene Kollergeräusch nicht mehr wahrgenommen wird.

In der unteren Hälfte der Fig. 1 ist beispielhaft der Verlauf des Abtriebsmomentes aus einer Antriebsanordnung gemäß der Erfindung dargestellt. In dem Muster ist keine Periodizität mehr zu erkennen.

Bei der erfindungsgemäßen Anordnung kann zwar in den geradzahligen Übersetzungen eventuell ein periodisches Muster wiedererkannt werden, was aber nicht mehr mit der ersten Ordnung der Antriebsdrehzahl korreliert. Um diesen Effekt weiter zu reduzieren kann in einer weiteren erfindungsgemäßen Ausgestaltung mittels des Getriebesteuergeräts das Getriebe so gesteuert werden, dass die problematischen Übersetzungen schnell durchfahren werden.

### Bezugszeichenliste

- 10: Kurbel-CVT-Getriebe
- 11: Abtriebsanordnung
- 12: Antriebswelle
- 14: Gehäuse
- 15: Exzenteranordnung
- 16: pleuelartiges Verbindungselement
- 18: Freilaufeinheit
- 19: Abtriebswelle
- 20: Kurbelglied
- e: Exzentrizität

## Patentansprüche

1. Kurbel-CVT-Getriebe (10) mit einer antreibbaren Eingangswelle (12) mit einer verstellbaren Exzenter-Antriebs-Anordnung (15) mit Exzenterbauteilen, die über pleuelähnliche Verbindungselemente (16) mit einer Abtriebsanordnung (11) verbunden ist, wobei die Abtriebsanordnung zumindest eine Abtriebswelle (19) und Freilaufeinrichtungen (18) zur Übertragung des Hubs der Verbindungselemente (16) auf die Abtriebswelle (19) enthält, **dadurch gekennzeichnet, dass** in der Abtriebsanordnung (11) ein Mittel zum Unterbrechen der periodischen Vorgänge in der Abtriebsanordnung vorgesehen ist, wobei
das Mittel zum Unterbrechen der periodischen Vorgänge eine Exzentrizität mindestens zweier Bauteile der Abtriebsanordnung enthält.

2. Kurbel-CVT-Getriebe (10) nach Anspruch 1, **dadurch gekennzeichnet, dass** die Drehachse einer oder mehrerer der Freilaufeinrichtungen (18) und die Drehachse der Abtriebswelle (19) exzentrisch zueinander sind.

3. Kurbel-CVT-Getriebe (10) nach Anspruch 2, **dadurch gekennzeichnet, dass** die mehreren Exzentrizitäten der Drehachsen der Freilaufeinrichtungen (18) gleichsinnig sind.

4. Kurbel-CVT-Getriebe (10) nach Anspruch 2, **dadurch gekennzeichnet, dass** die mehreren Exzentrizitäten der Drehachsen der Freilaufeinrichtungen (18) in verschieden Richtungen weisen und in der Größe der Exzentrizität gleich oder verschieden zueinander sind.

5. Kurbel-CVT-Getriebe (10) nach einem der Ansprüche 3 oder 4, **dadurch gekennzeichnet, dass** die Exzentrizitäten gleiche Beträge (e) aufweisen.

6. Kurbel-CVT-Getriebe (10) nach einem der Ansprüche 3 oder 4, **dadurch gekennzeichnet, dass** die Exzentrizitäten verschiedene Beträge (e) aufweisen.

7. Kurbel-CVT-Getriebe (10) nach einem der vorhergehenden Ansprüche, **dadurch gekennzeichnet, dass** die Abtriebswelle (19) exzentrisch gelagert ist.

8. Kurbel-CVT-Getriebe (10) nach Anspruch 7, **dadurch gekennzeichnet, dass** eine Hauptlagerung der Abtriebswelle (19) exzentrisch ist.

9. Kurbel-CVT-Getriebe (10) nach Anspruch 7, **dadurch gekennzeichnet, dass** beide Hauptlagerungen der Abtriebswelle (19) exzentrisch sind.

10. Kurbel-CVT-Getriebe (10) nach Anspruch 9, **dadurch gekennzeichnet, dass** die Exzentrizitäten der Hauptlagerungen in gleiche oder unterschiedliche Richtungen weisen.

11. Kurbel-CVT-Getriebe (10) nach Anspruch 9 oder 10, **dadurch gekennzeichnet, dass** die Exzentrizitäten der Hauptlagerungen gleiche oder unterschiedliche Beträge aufweisen.

12. Kurbel-CVT-Getriebe (10) nach einem der vorhergehenden Ansprüche, **dadurch gekennzeichnet, dass** die Drehachse zumindest einer der Freilaufeinrichtungen (18) und die Drehachse der Abtriebswelle (19) exzentrisch zueinander sind und die Abtriebswelle (19) exzentrisch gelagert ist.

13. Kurbel-CVT-Getriebe (10) nach einem der vorhergehenden Ansprüche, **dadurch gekennzeichnet, dass** der Betrag der Exzentrizität (e) zwischen 0,01 mm und 3 mm, bevorzugt 0,3 mm beträgt.

## Claims

1. Crank-CVT transmission (10) having a drivable input shaft (12) with an adjustable eccentric drive arrangement (15) with eccentric components which is connected to an output arrangement (11) via connecting elements (16) which are similar to connecting rods, the output arrangement containing at least one output shaft (19) and freewheeling devices (18) for transmitting the stroke of the connecting elements (16) to the output shaft (19), **characterized in that** a means for interrupting the periodic operations in the output arrangement is provided in the output arrangement (11), the means for interrupting the periodic operations containing an eccentricity of at least two components of the output arrangement.

2. Crank-CVT transmission (10) according to Claim 1, **characterized in that** the rotational axis of one or more of the freewheeling devices (18) and the rotational axis of the output shaft (19) are eccentric with respect to one another.

3. Crank-CVT transmission (10) according to Claim 2, **characterized in that** the plurality of eccentricities of the rotational axes of the freewheeling devices (18) are in the same direction.

4. Crank-CVT transmission (10) according to Claim 2, **characterized in that** the plurality of eccentricities of the rotational axes of the freewheeling devices (18) point in different directions and have the same or a different magnitude of eccentricity with respect to one another.

5. Crank-CVT transmission (10) according to either of Claims 3 and 4, **characterized in that** the eccentricities have identical values (e).

6. Crank-CVT transmission (10) according to either of Claims 3 and 4, **characterized in that** the eccentricities have different values (e).

7. Crank-CVT transmission (10) according to one of the preceding claims, **characterized in that** the output shaft (19) is mounted eccentrically.

8. Crank-CVT transmission (10) according to Claim 7, **characterized in that** one main mounting of the output shaft (19) is eccentric.

9. Crank-CVT transmission (10) according to Claim 7, **characterized in that** both main mountings of the output shaft (19) are eccentric.

10. Crank-CVT transmission (10) according to Claim 9, **characterized in that** the eccentricities of the main mountings point in identical or different directions.

11. Crank-CVT transmission (10) according to Claim 9 or 10, **characterized in that** the eccentricities of the main mountings have identical or different values.

12. Crank-CVT transmission (10) according to one of the preceding claims, **characterized in that** the rotational axis of at least one of the freewheeling devices (18) and the rotational axis of the output shaft (19) are eccentric with respect to one another, and the output shaft (19) is mounted eccentrically.

13. Crank-CVT transmission (10) according to one of the preceding claims, **characterized in that** the value of the eccentricity (e) is between 0.01 mm and 3 mm, preferably 0.3 mm.

## Revendications

1. Transmission à variation continue à vilebrequin (10) comprenant un arbre d'entrée entraînable (12) avec un agencement d'entraînement excentré réglable (15) comprenant des composants excentrés, lequel agencement est connecté par le biais d'éléments de connexion (16) de type bielle à un agencement de sortie (11), l'agencement de sortie comprenant au moins un arbre de sortie (19) et des dispositifs de roue libre (18) pour le transfert de la course des éléments de connexion (16) à l'arbre de sortie (19), **caractérisée en ce que** dans l'agencement de sortie (11) est prévu un moyen pour interrompre les opérations périodiques dans l'agencement de sortie,
le moyen pour interrompre les opérations périodiques présentant une excentricité d'au moins deux composants de l'agencement de sortie.

2. Transmission à variation continue à vilebrequin (10) selon la revendication 1, **caractérisée en ce que** l'axe de rotation d'un ou de plusieurs des dispositifs de roue libre (18) et l'axe de rotation de l'arbre de sortie (19) sont excentrés l'un par rapport à l'autre.

3. Transmission à variation continue à vilebrequin (10) selon la revendication 2, **caractérisée en ce que** les plusieurs excentricités des axes de rotation des dispositifs de roue libre (18) sont dans le même sens.

4. Transmission à variation continue à vilebrequin (10) selon la revendication 2, **caractérisée en ce que** les plusieurs excentricités des axes de rotation des dispositifs de roue libre (18) sont orientées dans des directions différentes et sont identiques ou différentes en termes d'amplitude d'excentricité.

5. Transmission à variation continue à vilebrequin (10) selon l'une quelconque des revendications 3 ou 4, **caractérisée en ce que** les excentricités présentent des valeurs (e) identiques.

6. Transmission à variation continue à vilebrequin (10) selon l'une quelconque des revendications 3 ou 4, **caractérisée en ce que** les excentricités présentent des valeurs (e) différentes.

7. Transmission à variation continue à vilebrequin (10) selon l'une quelconque des revendications précédentes, **caractérisée en ce que** l'arbre de sortie (19) est monté de manière excentrée.

8. Transmission à variation continue à vilebrequin (10) selon la revendication 7, **caractérisée en ce qu'**un support sur palier principal de l'arbre de sortie (19) est excentré.

9. Transmission à variation continue à vilebrequin (10) selon la revendication 7, **caractérisée en ce que** les deux supports sur palier principaux de l'arbre de sortie (19) sont excentrés.

10. Transmission à variation continue à vilebrequin (10) selon la revendication 9, **caractérisée en ce que** les excentricités des supports sur palier principaux sont orientées dans des directions identiques ou différentes.

11. Transmission à variation continue à vilebrequin (10) selon la revendication 9 ou 10, **caractérisée en ce que** les excentricités des supports sur palier principaux présentent des valeurs identiques ou différentes.

12. Transmission à variation continue à vilebrequin (10) selon l'une quelconque des revendications précédentes, **caractérisée en ce que** l'axe de rotation d'au moins l'un des dispositifs de roue libre (18) et l'axe de rotation de l'arbre de sortie (19) sont excentrés l'un par rapport à l'autre et l'arbre de sortie (19) est monté de manière excentrée.

13. Transmission à variation continue à vilebrequin (10) selon l'une quelconque des revendications précédentes, **caractérisée en ce que** la valeur de l'excentricité (e) est comprise entre 0,01 mm et 3 mm, de préférence vaut 0,3 mm.
